# EUROPEAN PATENT APPLICATION

(11) **EP 1 128 695 A1**
(43) Date of publication of application: **29.08.2001**
(21) Application number: 00440055.2
(22) Date of filing: 25.02.2000
(51) Int. Cl.: H04Q 7/38

(54) **Telecommunication system for managing user-service relationships, as well as method, as well as loadable computer program product, as well as stored computer program product**

(71) Applicant: ALCATEL, 75008 Paris (FR)
(72) Inventor: Broucke, Kurt, 9170 St. Gillis-Waas (BE); Hofkens, Jurgen, 2100 Deurne (BE)
(74) Representative: van Bommel, Jan Peter

(57) **Abstract**

Known telecommunication systems which per first service store user signals and relationship signals and per second service store user signals and relationship signals are difficult to manage in a time-consuming way. By storing per user his user signal and relationship signals defining relationships between said user and said services, an overview per user is created, which comprises all services for this user. This allows easier management in a more time-efficient way. Preferably, user signals and/or service signals and/or relationship signals are processable for user group purposes and/or service provider purposes.

## Description

The invention relates to a telecommunication system for managing user-service relationships for at least two users belonging to a user group and for at least a first service being provided by a service provider and at least a second service being provided by a service provider, comprising a memory for storing user signals defining users and for storing service signals defining services and for storing relationship signals defining user-service relationships.

Such a telecommunication system is known in the form of a system in which in said memory per first service (for example GSM subscription) user signals and relationship signals defining relationships between users and said first service are stored, and per second service (for example Virtual Private Network subscription) user signals and relationship signals defining relationships between users and said second service are stored. Said first service is provided by a first service provider, and said second service is provided by said first or an other, second service provider.

Such a telecommunication system is disadvantageous, inter alia, due to the management of such a system being difficult and time-consuming. For example in case of a new user having entered said user group and/or a user having left said user group, for each separate service, amendments need to be introduced separately.

It is an object of the invention, inter alia, to provide a telecommunication system as described in the preamble, which is easier to manage in a less time-consuming way.

Thereto, the telecommunication system according to the invention is characterised in that in said memory per first user a first user signal and a first relationship signal defining a relationship between said first user and said first service and a second relationship signal defining a relationship between said first user and said second service are stored, and per second user a second user signal and a third relationship signal defining a relationship between said second user and said first service and a fourth relationship signal defining a relationship between said second user and said second service are stored.

By storing per user his user signal and relationship signals defining relationships between said user and said services, an overview per user is available. For example in case of a new user having entered said user group and/or a user having left said user group, for this one user, amendments need to be introduced for each service, but with all services being present in said overview.

The invention is based on the insight, inter alia, that, in case of the number of available services increasing rapidly, a user-oriented environment will give a better overview than a service-oriented environment.

The invention solves the problem, inter alia, of providing a system which is easier to manage in a less time-consuming way.

A first embodiment of the telecommunication system according to the invention is characterised in that said user signals are first kind of signals, said service signals are second kind of signals and said relationship signals are third kind of signals, with said memory being coupled to a processor for processing at least two kinds of signals for user group purposes.

By allowing at least two of said three kinds of signals to be processed for user group purposes, user group conditions can be checked and/or used for correction. Then, a user group gets the possibility for example of checking whether a certain user is subscribed to a first service (GSM) and/or of amending a suscription in such a way that a certain user may only use said first service from Monday-Friday and not during the weekend, etc.

A second embodiment of the telecommunication system according to the invention is characterised in that said user signals are first kind of signals, said service signals are second kind of signals and said relationship signals are third kind of signals, with said memory being coupled to a processor for processing at least two kinds of signals for service provider purposes.

By allowing at least two of said three kinds of signals to be processed for service provider purposes, service provider conditions for a certain user group can be checked and/or used for correction. Then, a service provider gets the possibility for example of warning a certain user group that a limit of number of subscriptions to a first service (GSM) is going to be reached and/or of amending a subscription in such a way that a certain user group may no longer use said first service from 00h00 till 06h00, etc.

The invention further relates to a method for managing user-service relationships for at least two users belonging to a user group and for at least a first service being provided by a (first) service provider and at least a second service being provided by a (first or second) service provider, by storing user signals defining users and by storing service signals defining services and by storing relationship signals defining user-service relationships.

The method according to the invention is characterised in that said method comprises the steps of
- storing per first user a first user signal and a first relationship signal defining a relationship between said first user and said first service and a second relationship signal defining a relationship between said first user and said second service,
- storing per second user a second user signal and a third relationship signal defining a relationship between said second user and said first service and a fourth relationship signal defining a relationship between said second user and said second service.
   A first embodiment of the method according to the invention is characterised in that said user signals are first kind of signals, said service signals are second kind of signals and said relationship signals are third kind of signals, with said method comprising the step of
- processing at least two kinds of signals for user group purposes.

A second embodiment of the method according to the invention is characterised in that said user signals are first kind of signals, said service signals are second kind of signals and said relationship signals are third kind of signals, with said method comprising the step of
- processing at least two kinds of signals for service provider purposes.
   The invention yet further relates to a computer program product directly loadable into the internal memory of a digital computer, comprising software code portions for performing the steps of (an embodiment of) the method according to the invention, when said product is run on a computer.
   The invention also relates to a computer program product stored on a computer usable medium for managing user-service relationships for at least two users belonging to a user group and for at least a first service being provided by a (first) service provider and at least a second service being provided by a (first or second) service provider, said computer program product comprising
- computer readable means for defining users,
- computer readable means for defining services,
- computer readable means for defining user-service relationships.
   The computer program product stored on a computer usable medium according to the invention is characterised in that said computer program product comprises
- computer readable means for per first user defining said first user and a first relationship defining a relationship between said first user and said first service and a second relationship defining a relationship between said first user and said second service,
- computer readable means for per second user defining said second user and a third relationship defining a relationship between said second user and said first service and a fourth relationship defining a relationship between said second user and said second service.

A first embodiment of the computer program product stored on a computer usable medium according to the invention is characterised in that at least two of said three computer readable means for defining users, services and user-service relationships, are processable for user group purposes.

A second embodiment of the computer program product stored on a computer usable medium according to the invention is characterised in that at least two of said three computer readable means for defining users, services and user-service relationships, are processable for service provider purposes.

All references including further references cited with respect to and/or inside said references are considered to be incorporated in this patent application.

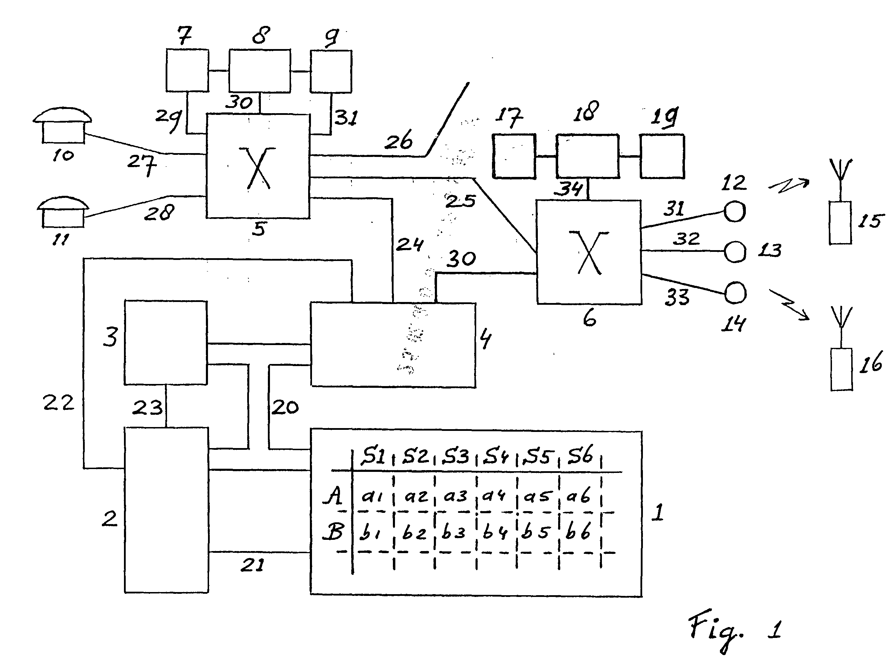

The invention will be further explained at the hand of an embodiment described with respect to a drawing, whereby
figure 1 discloses a telecommunication system according to the invention for performing a method according to the invention via a loadable and/or stored computer program product according to the invention.

The telecommunication system according to the invention shown in figure 1 comprises a memory 1 for storing per first user a first user signal A and a relationship signal al defining a relationship between said first user and a first service S1 and a relationship signal a2 defining a relationship between said first user and a second service S2 and a relationship signal a3 defining a relationship between said first user and a third service S3 and a relationship signal a4 defining a relationship between said first user and a fourth service S4 and a relationship signal a5 defining a relationship between said first user and a fifth service S5 and a relationship signal a6 defining a relationship between said first user and a sixth service S6 and for storing per second user a second user signal B and a relationship signal b1 defining a relationship between said second user and a first service S1 and a relationship signal b2 defining a relationship between said second user and a second service S2 and a relationship signal b3 defining a relationship between said second user and a third service S3 and a relationship signal b4 defining a relationship between said second user and a fourth service S4 and a relationship signal b5 defining a relationship between said second user and a fifth service S5 and a relationship signal b6 defining a relationship between said second user and a sixth service S6. Memory 1 is coupled via a bus 20 to a processor 2 and a RAM 3 and an interface 4. Processor 2 is coupled via a connection 21 to memory 1 and via a connection 22 to interface 4 and via a connection 23 to RAM 3. Interface 4 is coupled via connection 24 to a private switch 5 and via a connection 30 to a switch 6 for wireless/mobile communication. Switch 5 is coupled via a connection 28 to a telephone 11 and via a connection 27 to a telephone 10 and via a connection 25 to switch 6 for wireless/mobile communication and via a connection 26 to a network not shown. Private switch 5 is further coupled to its processor 8 via a connection 30 and to a unit 7 via a connection 29 and to a unit 9 via a connection 31, with units 7 and 9 being further coupled to processor 8. Switch 6 is coupled via a connection 31 to a basestation 12 and via a connection 32 to a basestation 13 and via a connection 33 to a basestation 14, for wireless/mobile communication with wireless/mobile terminals 15 and 16. Switch 6 is further coupled to its processor 18 via a connection 34, with units 17 and 19 being coupled to processor 18.

The telecommunication system according to the invention as shown in figure 1 functions as follows.

According to a first embodiment, switch 6 and basestations 12, 13 and 14 and terminals 15 and 16 form a so-called DECT system. A first user A as defined by first user signal A is subscribed to a first service S1 (DECT) as well as to a second service S2 (Virtual Private Network or VPN via switch 5). In other words a1 has a value (for example "one") representing a subscription to first service S1 and a2 has a value (for example "one") representing a subscription to second service S2. A second user B as defined by second user signal B is subscribed to second service S2 but is not subscribed to first service S1. In other words bl has a value (for example "zero") representing a non-subscription to first service S1 and b2 has a value (for example "one") representing a subscription to second service S2.

As a consequence, in case said first user A uses for example terminal 15 via basestation 12, this first user's identity is supplied to switch 6 via connection 31 in the form of an identity signal and/or his DECT number is supplied to switch 6 via connection 31 in the form of a DECT number signal, after which detection takes place via connection 34 in processor 18. In response to this, processor 18 sends a request signal (comprising said identity signal and/or DECT number signal as well as a destination signal defining interface 4) via connection 34 and switch 6 and connection 30 to interface 4. Interface 4 informs processor 2 of the arrival of this request signal via connection 22, in response to which processor 2 instructs interface 4 to supply (parts of) said request signal to bus 20, and instructs memory 1 via connection 21 to generate the value of al (said identity signal and/or said DECT number signal represents or corresponds to or is translated into said first user signal A, and either said request signal further comprises said first service signal S1 or said arrival of said request signal via connection 30 corresponds to or represents or is translated into said first service signal S1, both for addressing memory 1). Said value of a1 is supplied via bus 20 to processor 2, which detects the value of al (being "one") and in response generates an acknowledge signal (comprising said identity signal and/or DECT number signal as well as a destination signal defining switch 6), which acknowledge signal via bus 20 or connection 22 and interface 4 and connection 30 is supplied to switch 6. Then processor 18 detects said acknowledge signal via connection 34, in response to which first user A may use terminal 15 for making a DECT call.

As a consequence, in case said second user B uses for example terminal 16 via basestation 14, this second user's identity is supplied to switch 6 via connection 33 in the form of an identity signal and/or his DECT number is supplied to switch 6 via connection 33 in the form of a DECT number signal, after which detection takes place via connection 34 in processor 18. In response to this, processor 18 sends a request signal (comprising said identity signal and/or DECT number signal as well as a destination signal defining interface 4) via connection 34 and switch 6 and connection 30 to interface 4. Interface 4 informs processor 2 of the arrival of this request signal via connection 22, in response to which processor 2 instructs interface 4 to supply (parts of) said request signal to bus 20, and instructs memory 1 via connection 21 to generate the value of b1 (said identity signal and/or said DECT number signal represents or corresponds to or is translated into said second user signal B, and either said request signal further comprises said first service signal S1 or said arrival of said request signal via connection 30 corresponds to or represents or is translated into said first service signal S1, both for addressing memory 1). Said value of b1 is supplied via bus 20 to processor 2, which detects the value of b1 (being "zero") and in response generates a rejection signal (comprising said identity signal and/or DECT number signal as well as a destination signal defining switch 6), which rejection signal via bus 20 or connection 22 and interface 4 and connection 30 is supplied to switch 6. Then processor 18 detects said rejection signal via connection 34, in response to which second user B may not use terminal 16 for making a DECT call.

As a consequence, in case said first user A uses for example telephone 10, this first user's identity (via smart card and/or finger print and/or pin code and/or voice recognition etc.) is supplied to switch 5 via connection 27 in the form of an identity signal and/or his telephone number is supplied to switch 5 via connection 27 in the form of a telephone number signal or said telephone number is known in switch 5 due to connection 27 being used, after which detection takes place via connection 30 in processor 8. In response to this, processor 8 sends a request signal (comprising said identity signal and/or telephone number signal as well as a destination signal defining interface 4) via connection 30 and switch 5 and connection 24 to interface 4. Interface 4 informs processor 2 of the arrival of this request signal via connection 22, in response to which processor 2 instructs interface 4 to supply (parts of) said request signal to bus 20, and instructs memory 1 via connection 21 to generate the value of a2 (said identity signal and/or said telephone number signal represents or corresponds to or is translated into said first user signal A, and either said request signal further comprises said second service signal S2 or said arrival of said request signal via connection 24 corresponds to or represents or is translated into said second service signal S2, both for addressing memory 1). Said value of a2 is supplied via bus 20 to processor 2, which detects the value of a2 (being "one") and in response generates an acknowledge signal (comprising said identity signal and/or telephone number signal as well as a destination signal defining switch 5), which acknowledge signal via bus 20 or connection 22 and interface 4 and connection 24 is supplied to switch 5. Then processor 8 detects said acknowledge signal via connection 30, in response to which first user A may use telephone 10 for making a VPN call.

As a consequence, in case said second user B uses for example telephone 11, this second user's identity (via smart card and/or finger print and/or pin code and/or voice recognition etc.) is supplied to switch 5 via connection 28 in the form of an identity signal and/or his telephone number is supplied to switch 5 via connection 28 in the form of a telephone number signal or said telephone number is known in switch 5 due to connection 28 being used, after which detection takes place via connection 30 in processor 8. In response to this, processor 8 sends a request signal (comprising said identity signal and/or telephone number signal as well as a destination signal defining interface 4) via connection 30 and switch 5 and connection 24 to interface 4. Interface 4 informs processor 2 of the arrival of this request signal via connection 22, in response to which processor 2 instructs interface 4 to supply (parts of) said request signal to bus 20, and instructs memory 1 via connection 21 to generate the value of b2 (said identity signal and/or said telephone number signal represents or corresponds to or is translated into said second user signal B, and either said request signal further comprises said second service signal S2 or said arrival of said request signal via connection 24 corresponds to or represents or is translated into said second service signal S2, both for addressing memory 1). Said value of b2 is supplied via bus 20 to processor 2, which detects the value of b2 (being "one") and in response generates an acknowledge signal (comprising said identity signal and/or telephone number signal as well as a destination signal defining switch 5), which acknowledge signal via bus 20 or connection 22 and interface 4 and connection 24 is supplied to switch 5. Then processor 8 detects said acknowledge signal via connection 30, in response to which second user B may use telephone 11 for making a VPN call.

According to a first alternative to said first embodiment, at least a part of the content of memory 1 (for example at least column S2) is also stored in unit 7 being in the form of a memory. This could be done by either letting processor 2 push at least part of the content of memory 1 into memory 7 by sending a push signal (comprising said part of the content and a destination signal defining memory 7) via bus 20 and interface 4 and connection 24 and switch 5 and either connection 29 or connection 30 and processor 8 to memory 7 on a regular basis (for example each second or hour or day or week) in response to a timing signal or by letting processor 8 pull at least part of the content of memory 1 into memory 7 by sending a pull signal (comprising a destination signal defining memory 1 and an indication signal indicating which part is to be pulled) on a regular basis (for example each second or hour or day or week) in response to a timing signal, in response to which pull signal an information signal (comprising said part of the content and a destination signal defining memory 7) via bus 20 and interface 4 and connection 24 and switch 5 and either connection 29 or connection 30 and processor 8 is sent to memory 7.

According to a second alternative to said first embodiment, at least a part of the content of memory 1 (for example at least column S2) is moved and stored in unit 7 being in the form of a memory, whereby said corresponding part no longer is present is memory 1. This could be done by either letting processor 2 push at least part of the content of memory 1 into memory 7 by sending a push signal (comprising said part of the content and a destination signal defining memory 7) via bus 20 and interface 4 and connection 24 and switch 5 and either connection 29 or connection 30 and processor 8 to memory 7 on a regular basis (for example each second or hour or day or week) in response to a timing signal (and then delete said corresponding part in memory 1) or by letting processor 8 pull at least part of the content of memory 1 into memory 7 by sending a pull signal (comprising a destination signal defining memory 1 and an indication signal indicating which part is to be pulled) on a regular basis (for example each second or hour or day or week) in response to a timing signal, in response to which pull signal an information signal (comprising said part of the content and a destination signal defining memory 7) via bus 20 and interface 4 and connection 24 and switch 5 and either connection 29 or connection 30 and processor 8 is sent to memory 7 (whereby said corresponding part in memory 1 is to be deleted).

For both said first and second alternative, in case said first user A uses for example telephone 10, this first user's identity (via smart card and/or finger print and/or pin code and/or voice recognition etc.) is supplied to switch 5 via connection 27 in the form of an identity signal and/or his telephone number is supplied to switch 5 via connection 27 in the form of a telephone number signal or said telephone number is known in switch 5 due to connection 27 being used, after which detection takes place via connection 30 in processor 8. In response to this, processor 8 sends a request signal (comprising said identity signal and/or telephone number signal to memory 7. Memory 7 supplies the value of a2 (said identity signal and/or said telephone number signal represents or corresponds to or is translated into said first user signal A, and either said request signal further comprises said second service signal S2 or said arrival of said request signal via processor 8 corresponds to or represents or is translated into said second service signal S2, both for addressing memory 7). Said value of a2 is supplied to processor 8, which detects the value of a2 (being "one") and in response first user A may use telephone 10 for making a VPN call.

According to a third alternative to said first embodiment, at least a part of the content of memory 1 (for example at least column S1) is also stored in unit 17 being in the form of a memory. This could be done by either letting processor 2 push at least part of the content of memory 1 into memory 17 by sending a push signal (comprising said part of the content and a destination signal defining memory 17) via bus 20 and interface 4 and connection 30 and switch 6 and either connection 35 (not shown between switch 6 and memory 17) or connection 34 and processor 18 to memory 17 on a regular basis (for example each second or hour or day or week) in response to a timing signal or by letting processor 18 pull at least part of the content of memory 1 into memory 17 by sending a pull signal (comprising a destination signal defining memory 1 and an indication signal indicating which part is to be pulled) on a regular basis (for example each second or hour or day or week) in response to a timing signal, in response to which pull signal an information signal (comprising said part of the content and a destination signal defining memory 17) via bus 20 and interface 4 and connection 30 and switch 6 and either connection 35 or connection 34 and processor 18 is sent to memory 17.

According to a fourth alternative to said first embodiment, at least a part of the content of memory 1 (for example at least column S1) is moved and stored in unit 17 being in the form of a memory, whereby said corresponding part no longer is present is memory 1. This could be done by either letting processor 2 push at least part of the content of memory 1 into memory 17 by sending a push signal (comprising said part of the content and a destination signal defining memory 17) via bus 20 and interface 4 and connection 30 and switch 6 and either connection 35 or connection 34 and processor 18 to memory 17 on a regular basis (for example each second or hour or day or week) in response to a timing signal (and then delete said corresponding part in memory 1) or by letting processor 18 pull at least part of the content of memory 1 into memory 17 by sending a pull signal (comprising a destination signal defining memory 1 and an indication signal indicating which part is to be pulled) on a regular basis (for example each second or hour or day or week) in response to a timing signal, in response to which pull signal an information signal (comprising said part of the content and a destination signal defining memory 17) via bus 20 and interface 4 and connection 30 and switch 6 and either connection 35 or connection 34 and processor 18 is sent to memory 17 (whereby said corresponding part in memory 1 is to be deleted).

For both said third and fourth alternative, in case said first user A uses for example terminal 15 via basestation 12, this first user's identity is supplied to switch 6 via connection 31 in the form of an identity signal and/or his DECT number is supplied to switch 6 via connection 31 in the form of a DECT number signal, after which detection takes place via connection 34 in processor 18. In response to this, processor 18 sends a request signal (comprising said identity signal and/or DECT number signal to memory 17. Memory 17 supplies the value of al (said identity signal and/or said DECT number signal represents or corresponds to or is translated into said first user signal A, and either said request signal further comprises said first service signal S1 or said arrival of said request signal via processor 18 corresponds to or represents or is translated into said first service signal S1, both for addressing memory 17). Said value of a1 is supplied to processor 18, which detects the value of a1 (being "one") and in response first user A may use terminal 15 for making a DECT call.

According to a second embodiment, the system can be managed by a user, for example via telephones 10,11 and/or terminals 15,16.

For example said first user A uses for example telephone 10. Then, as described before at the hand of said request signal and said acknowledge signal, said first user can make a VPN call, and generates a management signal comprising this first user's identity (via smart card and/or finger print and/or pin code and/or voice recognition etc.) in the form of an identity signal and/or his telephone number in the form of a telephone number signal and/or a destination signal defining interface 4. Said management signal is generated at telephone 10 and/or switch 5 and/or processor 8, after which it is sent to interface 4 via connection 24. Interface 4 informs processor 2 of the arrival of this management signal via connection 22, in response to which processor 2 instructs interface 4 to supply (parts of) said management signal to bus 20, and instructs memory 1 via connection 21 to generate (parts of) the content of memory 1 (said identity signal and/or said telephone number signal represents or corresponds to or is translated into signals defining rows, and either said management signal further comprises signals defining columns or said arrival of said management signal via connection 24 corresponds to or represents or is translated into said signals defining columns, both for addressing memory 1). Said (part of) the content of memory 1 is supplied via bus 20 and interface 4 and connection 24 and switch 5 and connection 30 to processor 8, which detects said (part of) the content and either stores it in memory 7 or supplies it via connection 27 to telephone 10, in response to which first user A may manage the (part of) the content of memory 1, for example by amending the value of b1 from "zero" to "one" (thereby allowing second user B to start using terminal 16 for making DECT calls), or for example by amending the value of b2 from "one" to "zero" (thereby making it impossible to second user B to use telephone 11 any longer for making VPN calls). These amendments are either stored in memory 7 and then supplied to and stored in memory 1, or are directly supplied to and stored in memory 1, for example via an amendment signal comprising said amendments and/or a destination signal defining memory 1 and/or defining certain rows and/or columns etc.

For example said first user A uses for example terminal 15. Then, as described before at the hand of said request signal and said acknowledge signal, said first user can make a DECT call, and generates a management signal comprising this first user's identity (via smart card and/or finger print and/or pin code and/or voice recognition etc.) in the form of an identity signal and/or his DECT number in the form of a DECT number signal and/or a destination signal defining interface 4. Said management signal is generated at terminal 15 and/or switch 6 and/or processor 18, after which it is sent to interface 4 via connection 30. Interface 4 informs processor 2 of the arrival of this management signal via connection 22, in response to which processor 2 instructs interface 4 to supply (parts of) said management signal to bus 20, and instructs memory 1 via connection 21 to generate (parts of) the content of memory 1 (said identity signal and/or said DECT number signal represents or corresponds to or is translated into signals defining rows, and either said management signal further comprises signals defining columns or said arrival of said management signal via connection 30 corresponds to or represents or is translated into said signals defining columns, both for addressing memory 1). Said (part of) the content of memory 1 is supplied via bus 20 and interface 4 and connection 30 and switch 6 and connection 34 to processor 18, which detects said (part of) the content and either stores it in memory 17 or supplies it via connection 31 and basestation 12 to terminal 15, in response to which first user A may manage the (part of) the content of memory 1, for example by amending the value of b1 from "zero" to "one" (thereby allowing second user B to start using terminal 16 for making DECT calls), or for example by amending the value of b2 from "one" to "zero" (thereby making it impossible to second user B to use telephone 11 any longer for making VPN calls). These amendments are either stored in memory 17 and then supplied to and stored in memory 1, or are directly supplied to and stored in memory 1, for example via an amendment signal comprising said amendments and/or a destination signal defining memory 1 and/or defining certain rows and/or columns etc.

According to a first alternative to said second embodiment, for example a pc not shown and coupled to processor 2 is used for managing purposes. For example a third user C uses said pc, and generates a management signal comprising this third user's identity (via smart card and/or finger print and/or pin code and/or voice recognition etc.) in the form of an identity signal and/or his pc address in the form of a pc address signal and/or a destination signal defining memory 1. In response, processor 2 instructs memory 1 via connection 21 to generate (parts of) the content of memory 1 (said identity signal and/or said pc address signal represents or corresponds to or is translated into signals defining rows and/or columns, and/or said management signal further comprises signals defining rows and/or columns, both for addressing memory 1). Said (part of) the content of memory 1 is supplied via bus 20 to processor 2 and/or RAM 3, in response to which third user C may manage the (part of) the content of memory 1, for example by amending the value of b1 from "zero" to "one" (thereby allowing second user B to start using terminal 16 for making DECT calls), or for example by amending the value of a2 from "one" to "zero" (thereby making it impossible to first user A to use telephone 11 any longer for making VPN calls). These amendments are either stored in RAM 3 and then supplied to and stored in memory 1, or are directly supplied to and stored in memory 1, for example via an amendment signal comprising said amendments and/or a destination signal defining memory 1 and/or defining certain rows and/or columns etc.

According to a second alternative to said second embodiment, at least a part of the content of memory 1 (for example at least column S2) is also stored in memory 7, or at least a part of the content of memory 1 (for example at least column S2) is moved and stored in memory 7, whereby said corresponding part no longer is present is memory 1, and/or at least a part of the content of memory 1 (for example at least column S1) is also stored in memory 17, or at least a part of the content of memory 1 (for example at least column S1) is moved and stored in memory 17, whereby said corresponding part no longer is present is memory 1. As described before, this could be done at the hand of the push signals and/or pull signals. Then, for example said first user A using for example telephone 10 could manage things, as described before at the hand of said request signal and/or said acknowledge signal and/or said management signal and/or said amendment signal. Or, for example said first user A using for example terminal 15 could manage things, as described before at the hand of said request signal and/or said acknowledge signal and/or said management signal and/or said amendment signal. Or, for example said third user C using said pc not shown and coupled to processor 2 could manage things, as described before at the hand of said request signal and/or said acknowledge signal and/or said management signal and/or said amendment signal.

Of course, at least parts of said request signal and at least parts of said management signal can be combined and/or integrated. Said managing can be done on-line or off-line. Said telephones 10,11 and said terminals 15,16 are preferably provided with a screen/display in case of being used for managing purposes. Even though (parts of) the content of memory 1 can be copied (with the original (parts of) the content remaining present in memory 1) and/or moved (without the original (parts of) the content remaining present in memory 1) and stored in memories 7 and/or 17, it should be noted that according to the invention at at least one location in at least one memory there will be an overview per user of his relationships with his services. Said overview will be generally present and may only temporarily be interrupted by said copying and/or moving of (parts of) said content.

According to a third embodiment, (parts of) the content of memories 1 and/or 7 and/or 17 are processable via for example processors 2 and/or 8 and/or 18 for user group purposes.

For example, in case of memory 1 and processor 2 being involved, either each time an amendment has been made to the content of memory 1 or on a regular basis (each hour or day or week etc.) a software program is run via processor 2, for comparing per user said relationship signals with predefined signals and for in dependence of a comparison result correcting a relationship signal or not and/or informing the user group. Such a software program is stored in either memory 1 and/or RAM 3 or in memory 7 or 17 (and then downloaded when necessary into memory 1 and/or RAM 3), and allows a user group to check the relationships between its users and the services.

For example, in case of memory 1 and processor 8 (18) being involved, either each time an amendment has been made to the content of memory 1 or on a regular basis (each hour or day or week etc.) a software program is run via processor 8 (18), for comparing per user said relationship signals with predefined signals and for in dependence of a comparison result correcting a relationship signal or not and/or informing the user group. Such a software program is stored in either memory 1 and/or RAM 3 (and then downloaded when necessary into memory 7(17)) or in memory 7 (17), and allows a user group to check the relationships between its users and the services.

For example, in case of memory 7 (17) and processor 8 (18) being involved, either each time an amendment has been made to the content of memory 7 (17) or on a regular basis (each hour or day or week etc.) a software program is run via processor 8 (18), for comparing per user said relationship signals with predefined signals and for in dependence of a comparison result correcting a relationship signal or not and/or informing the user group. Such a software program is stored in either memory 1 and/or RAM 3 (and then downloaded when necessary into memory 7(17)) or in memory 7 (17), and allows a user group to check the relationships between its users and the services.

According to a fourth embodiment, (parts of) the content of memories 1 and/or 7 and/or 17 are processable via for example processors 2 and/or 8 and/or 18 for service provider purposes.

For example, in case of memory 1 and processor 2 being involved, either each time an amendment has been made to the content of memory 1 or on a regular basis (each hour or day or week etc.) a software program is run via processor 2, for comparing per service said relationship signals with predefined signals and for in dependence of a comparison result correcting a relationship signal or not and/or informing the service provider. Such a software program is stored in either memory 1 and/or RAM 3 or in memory 7 or 17 (and then downloaded when necessary into memory 1 and/or RAM 3), and allows a service provider to check the relationships between (users of) a user group and one or more services.

For example, in case of memory 1 and processor 8 (18) being involved, either each time an amendment has been made to the content of memory 1 or on a regular basis (each hour or day or week etc.) a software program is run via processor 8 (18), for comparing per service said relationship signals with predefined signals and for in dependence of a comparison result correcting a relationship signal or not and/or informing the service provider. Such a software program is stored in either memory 1 and/or RAM 3 (and then downloaded when necessary into memory 7(17)) or in memory 7 (17), and allows a service provider to check the relationships between (users of) a user group and one or more services.

For example, in case of memory 7 (17) and processor 8 (18) being involved, either each time an amendment has been made to the content of memory 7 (17) or on a regular basis (each hour or day or week etc.) a software program is run via processor 8 (18), for comparing per service said relationship signals with predefined signals and for in dependence of a comparison result correcting a relationship signal or not and/or informing the service provider. Such a software program is stored in either memory 1 and/or RAM 3 (and then downloaded when necessary into memory 7(17)) or in memory 7 (17), and allows a service provider to check the relationships between (users of) a user group and one or more services.

All embodiments are just embodiments and do not exclude other embodiments not shown and/or described. All alternatives are just alternatives and do not exclude other alternatives not shown and/or described. For example, each at least two embodiments and/or at least two alternatives and/or at least one embodiment and at least one alternative can be combined into a new one. Other services than said VPN service and said DECT service are possible, for example a GSM service, a fax service, a directory access service, a remote access service (for working at home) etc. Further, said relationship signals can have more than two values, to allow more possibilities, like for example giving said first user said DECT possibility from Monday till Friday 24 hours a day and for example giving said second user said DECT possibility every day from 08h00 until 18h00, etc. Said user group for example is a closed user group. Further, known technology can be added, like authentication and/or authorisation, for example to be realised via said identity signal, etc. In general, said first service is provided by a first service provider and said second service is provided by either said first service provider or an other, second service provider, whereby the term "service provider" does not exclude said user's own (closed) user group and/or an other (closed) user group.

## Claims

1. Telecommunication system for managing user-service relationships for at least two users belonging to a user group and for at least a first service being provided by a service provider and at least a second service being provided by a service provider, comprising a memory for storing user signals defining users and for storing service signals defining services and for storing relationship signals defining user-service relationships, characterised in that in said memory per first user a first user signal and a first relationship signal defining a relationship between said first user and said first service and a second relationship signal defining a relationship between said first user and said second service are stored, and per second user a second user signal and a third relationship signal defining a relationship between said second user and said first service and a fourth relationship signal defining a relationship between said second user and said second service are stored.

2. Telecommunication system according to claim 1, characterised in that said user signals are first kind of signals, said service signals are second kind of signals and said relationship signals are third kind of signals, with said memory being coupled to a processor for processing at least two kinds of signals for user group purposes.

3. Telecommunication system according to claim 1 or 2, characterised in that said user signals are first kind of signals, said service signals are second kind of signals and said relationship signals are third kind of signals, with said memory being coupled to a processor for processing at least two kinds of signals for service provider purposes.

4. Method for managing user-service relationships for at least two users belonging to a user group and for at least a first service being provided by a service provider and at least a second service being provided by a service provider, by storing user signals defining users and by storing service signals defining services and by storing relationship signals defining user-service relationships, characterised in that said method comprises the steps of
- storing per first user a first user signal and a first relationship signal defining a relationship between said first user and said first service and a second relationship signal defining a relationship between said first user and said second service,
- storing per second user a second user signal and a third relationship signal defining a relationship between said second user and said first service and a fourth relationship signal defining a relationship between said second user and said second service.

5. Method according to claim 4, characterised in that said user signals are first kind of signals, said service signals are second kind of signals and said relationship signals are third kind of signals, with said method comprising the step of
- processing at least two kinds of signals for user group purposes.

6. Method according to claim 4 or 5, characterised in that said user signals are first kind of signals, said service signals are second kind of signals and said relationship signals are third kind of signals, with said method comprising the step of
- processing at least two kinds of signals for service provider purposes.

7. A computer program product directly loadable into the internal memory of a digital computer, comprising software code portions for performing the steps of claims 4, 5 or 6, when said product is run on a computer.

8. A computer program product stored on a computer usable medium for managing user-service relationships for at least two users belonging to a user group and for at least a first service being provided by a service provider and at least a second service being provided by a service provider, said computer program product comprising
- computer readable means for defining users,
- computer readable means for defining services,
- computer readable means for defining user-service relationships, characterised in that said computer program product comprises
- computer readable means for per first user defining said first user and a first relationship defining a relationship between said first user and said first service and a second relationship defining a relationship between said first user and said second service,
- computer readable means for per second user defining said second user and a third relationship defining a relationship between said second user and said first service and a fourth relationship defining a relationship between said second user and said second service.

9. A computer program product stored on a computer usable medium according to claim 8, characterised in that at least two of said three computer readable means for defining users, services and user-service relationships, are processable for user group purposes.

10. A computer program product stored on a computer usable medium according to claim 8 or 9, characterised in that at least two of said three computer readable means for defining users, services and user-service relationships, are processable for service provider purposes.
